# EUROPÄISCHE PATENTSCHRIFT

(11) **EP 1 025 660 B1**
(45) Veröffentlichungstag und Bekanntmachung des Hinweises auf die Patenterteilung: **26.02.2003**
(21) Anmeldenummer: 98943690.2
(22) Anmeldetag: 14.07.1998
(51) Int. Cl.: H04B 10/155

(54) **OPTISCHER SENDER MIT EINER MODULIERBAREN WELLENLÄNGENSTABILEN LASERQUELLE**
OPTICAL EMITTER HAVING A MODULATABLE LASER SOURCE WITH STABLE WAVELENGTH
EMETTEUR OPTIQUE POURVU D'UNE SOURCE LASER MODULABLE A LONGUEUR D'ONDE STABLE

(30) Priorität: 15.10.1997 DE 19745466
(43) Veröffentlichungstag der Anmeldung: 09.08.2000
(73) Patentinhaber: ROBERT BOSCH GMBH, 70442 Stuttgart (DE)
(72) Erfinder: SCHUNK, Nikolaus, D-31139 Hildesheim (DE)
(86) Internationale Anmeldenummer: DE9801965
(87) Internationale Veröffentlichungsnummer: WO99020003

(56) Entgegenhaltungen:
- EP-A- 0 580 990
- EP-A- 0 584 647
- GB-A- 2 308 461
- PATENT ABSTRACTS OF JAPAN vol. 012, no. 225 (E-626), 25. Juni 1988 & JP 63 017572 A (JAPAN AVIATION ELECTRONICS IND LTD), 25. Januar 1988

## Beschreibung

### Stand der Technik

Die Erfindung geht aus von einem optischen Sender mit einer modulierbaren wellenlängenstabilen Laserquelle nach der Gattung des Hauptanspruchs und entsprechend GB-A-2 308 461.

Aus der EP 0 584 647 ist ein optischer Sender bekannt, wie er in der optischen Nachrichtentechnik eingesetzt, wird. Der Sender besteht aus einer Laserquelle, deren Signal vor der Einkopplung in die Übertragungsstrecke moduliert wird. Ein solcher Sender wird in der Breitbandkommunikation eingesetzt, um Daten über große Strecken zu übertragen. Das Übertragungssystem arbeitet dabei auf einer bestimmten Wellenlänge. Der Sender ist gegen Einstreuungen von Licht anderer Wellenlängen ungeschützt, die zu Verzerrungen und Verrauschungen des Ausgangssignals führen können.

### Vorteile der Erfindung

Der erfindungsgemäße optische Sender mit den kennzeichnenden Merkmalen des Hauptanspruchs hat demgegenüber den Vorteil, daß nur die optische Leistung bei der Sendewellenlänge über ein Michelson-Interferometer reilektiv und Wellenlängenselektiv in die Übertragungsstrecke eingekoppelt wird. Wellenlängen außerhalb der Bandbreite des Michelson-Interferometers passieren dieses und können abgesumpft werden. Das Bandpaßfilter verhindert, daß Signale anderer Wellenlängen als der Wellenlänge des Senders über die angekoppelte Faser in den Sender gelangen können. Dadurch bleibt die Laserquelle frei von Störungen und Überlagerungen fremder Wellenlängen, was zu einer sehr stabilen Wellenlängenselektion führt. Dadurch wird ein Einsatz des erfindungsgemäßen Senders in einem System, das ein Wellenlängenmultiplex als Übertragungsverfahren verwendet, möglich. Es müssen bei einem Einsatz in einem Wellenlängenmultiplex-Übertragungssystem keine weiteren Vorkehrungen getroffen werden, um den Sender vor den Wellenlängen anderer Sender zu schützen. Wellenlängen-Übersprechen in einem Wellenlängenmultiplex-Übertragungssystem wird somit tolerierbarer.

Durch die in den Unteransprüchen aufgeführten Maßnahmen ist eine vorteilhafte Weiterbildung und Verbesserung des im Hauptanspruch angegebenen optischen Senders möglich.

Besonders vorteilhaft ist es, wenn die Laserquelle aus einem Halbleiterlaser besteht, dessen Feldverteilung an der Stirnseite zu einem angekoppelten Streifenwellenleiter aufgeweitet ist. Durch die Strahlaufweitung läßt sich der Halbleiterlaser passiv und damit auf einfache Weise an den Streifenwellenleiter ankoppeln. Zur Wellenlängeneinstellung wird auf die Stirnfläche, die an den Streifenwellenleiter angekoppelt wird, eine Antireflektionsschicht aufgebracht, die den Laserresonator des Halbleiterchips beseitigt. Der angekoppelte Streifenwellenleiter besteht aus einer Quarzglas-Kern-Mantelstruktur, wobei der Wellenleiterkern aus mit Germanium dotiertern Glas besteht. In den Wellenleiterkern läßt sich mittels UV-Licht ein Bragg-Gitter einschreiben. Das wellenlängenselektive Bragg-Gitter und die andere abgewandte Halbleiterlaserstirnfläche bilden den Laserresonator. Bedingt durch die Wellenlängenselektion des Bragg-Gitters Schwinge der Laser auf der Wellenlänge des Bragg-Gitters. Über die interne Strommodulation der Laserdiode läßt sich das Datensignal der optischen Leistung aufmodulieren. Vorteilhafterweise wird sowohl der Streifenwellenleiter der Laserdiode als auch der Glasstreifenwellenleiter schräg zur Antireflexschicht ausgeführt. Dadurch werden Restreflexionen an einer nichtidealen Antirefexschicht sowohl in Richtung Halbleiterlaser, als auch zum Bragg-Gitter unterdrückt. Die jeweils reflektierte Leistung wird aufgrund der schrägen Endfläche nicht in den jeweiligen Streifenwellenleiter eingekoppelt. Im Emissionsspektrum bilden sich durch die Unterdrückung der Refexion an der Antirefexionsschicht keine zusätzliche Modenstrukur, die zu Modensprüngen führen könnte, aus.

Vorteilhafterweise kann auch eine andere Ausführung für eine wellenlängenselektive Sendequelle verwendet werden. Die hochstabile wellenlängenselektive Quelle ist als erbium/ytterbium-dotierter Glaswellenleiter-DFB-Laser ausgeführt. Ein Halbleiterlaser wird als Pumpquelle verwendet. Über die Höhe der Pumpleistung läßt sich die optische Ausgangsleistung einstellen. Die Modulation erfolgr extern, was den Vorteil aufweist, daß höhere Modulationsraten bis in den Gigabitbereich möglich werden.

Vorteilhafterweise weisen alle reflektiv an die Übertragungsfaser angekoppelten Sender einen Wellensumpf für die Wellenlängen auf, die nicht von der Laserdiode emittiert werden. Dieser Wellensumpf kann aus Abschrägungen oder einer rauhen Kante der planaren Glasstreifenwellenleiterenden bestehen, die nicht an die Laserdiode und die Übertragungsfaser angekoppelt sind.

### Zeichnung

Ausführungsbeispiele der Erfindung sind in den Zeichnungen dargestellt und in der nachfolgenden Beschreibung näher erläutert. Es zeigt Figur 1 den Aufbau des optischen Senders, Figur 2 ein Ausführungsbeispiel des optischen Senders, Figur 3 die Ankopplung des Halbleiterlasers an den Glasstreifenwellenleiter mit Bragg-Gitter und Figur 4 ein weiteres Ausführungsbeispiel des optischen Senders.

### Beschreibung des Ausführungsbeispiels

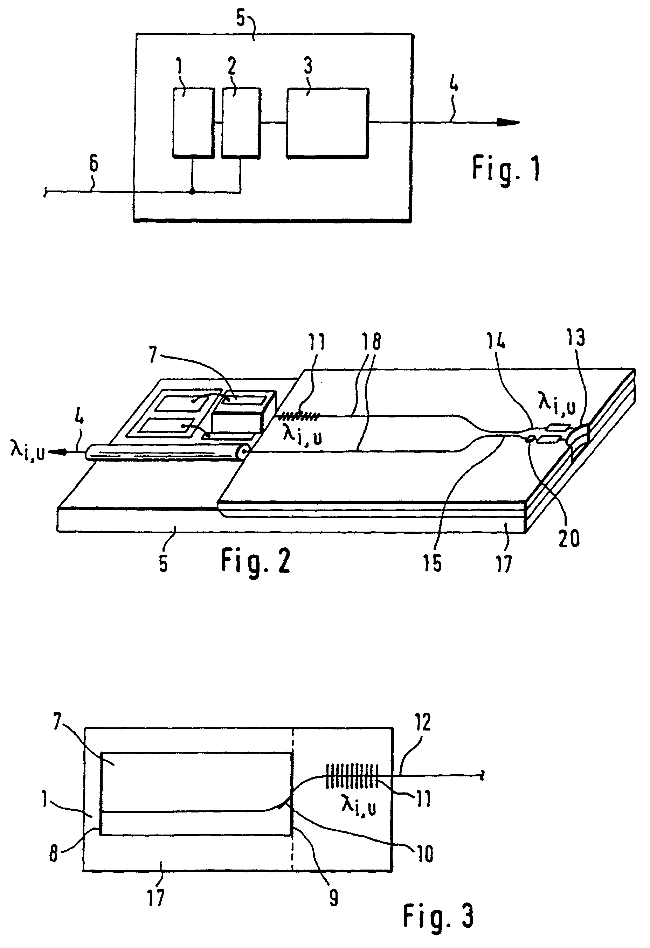

Figur 1 zeigt den schematischen Aufbau des optischen Senders. Die Laserquelle 1 ist mit einem Modulator 2 verbunden, der wiederum mit einem Reflektor 3 in Verbindung steht.
Durch den Reflektor 3 gelangt das Lasersignal 4 in die auskoppelnde Faser. Der optische Sender 5 weist einen elektrischen Anschluß 6 auf. Durch den elektrischen Anschluß 6 wird sowohl die Laserquelle 1, als auch der Modulator 2 mit Energie versorgt. Die Trennung zwischen Laserquelle und Modulator ist nicht zwingend, da auch eine interne Modulation zum Beispiel eines Halbleiterlasers möglich ist.

Figur 2 zeigt einen erfindungsgemäßen optischen Sender 5, der auf einem Siliziumchip 17 aufgebaut ist. Auf dem Siliziumchip 17 ist ein Halbleiterlaser 7 sowie eine optische planare Schaltung mit Streifenwellenleitern 18 in Glas ausgeführt. Der Halbleiterlaser 17 ist an den Streifenwellenleiter 18 angekoppelt. In den Wellenleiterkern des StreifenWellenleiter ist ein UV-induziertes Bragg-Gitter 11 eingeschrieben, das die Emissionswellenlänge des Halbleiterlasers festlegt. Dieser Sendequelle ist ein Michelson-Interferometer nachgeschaltet, das als reflektives optisches Bandpaßfilter arbeitet. Es besteht aus dem 3dB-Koppler 15 und 2 UV-induzierten Gittern 14 in den Wellenleiterarmen. Die UV-induzierten Gitter reflektieren die Sendeleistung bei der Sendewellenlänge. Über eine UV-induzierte Brechzahländerung 20 wird das reflektive Bandpaßfilter auf Maximum getrimmt. Der planare Streifenwellenleiter ist ausgangsseitig mit einer Glasfaser 4 verbunden, die das auszukoppelnde Signal führt. Die offenen Wellenleiterarme des Bandpaßfilters enden in einer schrägen Kante 13 der planaren optischen Schaltung. Wellenlängen außer der Sendewellenlänge werden an der schrägen Kante abgelenkt und damit abgesumpft.

Ein Halbleiterlaser 7 mit Bragg-Gitter ist bereits aus der Veröffentlichung "Integrated external cavity laser ..." von T. Tanaka et al., Elctronics Letters, vol. 32, no. 13. Seiten 1202ff., bekannt und muß daher nicht mehr im Detail beschrieben werden. Der Halbleiterlaser, wobei vorzugsweise ein Halbleiterlaser mit aufgeweitetem Felddurchmesser aus Koppelgründen verwendet wird, emittiert in Verbindung mit dem wellenlängenselektiven Bragg-Gitter stabil bei der Bragg-Wellenlange λᵢ. Mit einem Reflexionskoeffizienten >40% des Bragg-Gitters 11 wird die Sendequelle unempfindlicher gegenüber externen Reflexionen bei der Sendewellenlänge λᵢ. Die Bragg-Gitter 11 und 14 können sehr temperaturstabil realisiert werden, indem die planaren Streifenwellenleiter 18 eine hohe Bor-Dotierung aufweisen, Die Herstellung der Gitter selbst erfolgt über Belichtung mit UV-Licht, wobei entweder eine Phasenmaske eingesetzt wird oder das UV-Licht in einem Interferometeraufbau kohärent überlagert wird. Ein Problem bei der Ankopplung der Laserdiode 7 an den planaren Wellenleiter stellen Reflexionen an der Trennfläche Halbleiterkristall-Glasstreifenwellenleitar dar.

Figur 3 zeigt eine Detailskizze der Wellenlängen-stabilen Sendequelle. Die Halbleiterlaserdiode 7 besitzt an dem nicht angekoppelten Ende eine hochreflektierends Schicht 8, aus der kein oder nur ein sehr geringer Lichtanteil abgestrahlt wird. Die Laserdiode ist so ausgelegt, daß zum anderen Ende hin das Feld aufgeweitet ist. Damit ist es möglich, die Laserdiode in einem passiven Koppelprozeß an einen Glaswellenleiter anzukoppeln. Um eine stabile Emission bei der Wellenlänge λᵢ zu erzielen, wird die angekoppelte Stirnfläche der Laserdiode 7 mit einer Antireflexionsschicht 9 versehen. Der Laserresonator wird dann aus der hochreflektierenden Schicht 8 und dem wellenlängenselektiven Bragg-Gitter 11 in dem Streifenwellenleiter gebildet. Führt man den aktiven Wellenleiter in der Laserdiode senkrecht auf die Antireflektionsschicht, führen interne Reflexionen an einer nicht idealen Antireflektionsschicht zu Sprüngen in der Emissionswellenlänge (Modensprünge). Diese treten insbesondere bei Temperaturänderungen und bei Strommodulation des Lasers mit dem Datensignal auf. Um diese Modensprünge zu unterdrücken, wird der aktive Streifenwellenleiter in der Laserdiode schräg auf die Stirnfläche mit der Antireflexionsschicht 9 geführt. Ebenso wird der Glasstreifenwellenleiter an die Laserdiode geführt. Dadurch, daß beide Wellenleiter schräg auf die Trennfläche führen, werden die jeweils reflektierten optischen Leistungen nicht in die Streifenwellenleiter wieder eingekoppelt. Da dadurch keine Mehrfachreflexionen im Laserresonsator auftreten, werden Modensprünge weitestgehend unterdrückt. Entsprechend Figur 2 durchläuft die emittierte oprische Leistung das reflektive Bandpaßfilter und wird in die Übertragungsfaser 4 eingekoppelt. Da das reflektive Bandpaßfilter nur Wellenlängen in einem sehr kleinen Bereich um die Emissionswellenlänge herum auf den Ausgangswellenleiter überträgt, werden insbesondere bei Modulation Leistungen bei unerwünschten Wellenlängen, ungleich der Emissionswellenlänge, nicht auf die Übertragungsstrecke übertragen.
Wellenlängen ungleich λᵢ, die in umgekehrter Richtung laufen, gelängen nicht in die Sendequelle, da für diese Wellenlängen das reflektive Bandpaßfilter transparent ist und am Ende durch die schräge Kante quasi abgesumpft ist. Durch den Einsatz des Bandpaßfilters 14,15 muß man nicht befürchten, daß eine andere Wellenlänge das Bragg-Gitter 11 ungehindert durchläuft und die Halbleiterlaserdiode errreicht. Das reflektive Bandpaßfilter ersetzt für Wellenlängen ungleich λᵢ einen optischen Isolator.

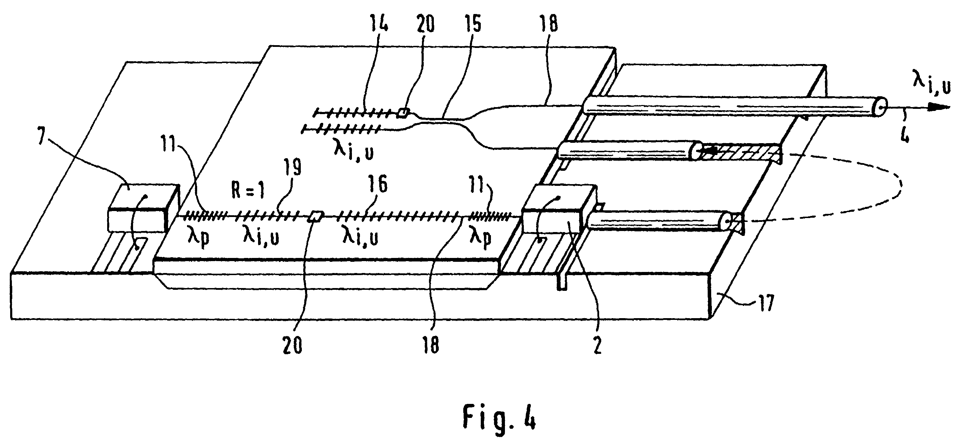

Figur 4 beschreibt eine weitere Ausführungsrorm des optischen Senders, wobei die Laserquelle bereits in der nicht vorveröffentlichten DE 19705669 beschrieben wird. Die hochstabile Laser wird aus einem erbium/ytterbium-dotierten Glaswellenleiter 15 gebildet. Durch Einschreiben eines UV-indusierren Gitters in dem erbium/ytterbium-dotierten Wellenleiterbereich wird ein DFB-Laser realisiert. Dieser Wellenleiterlaser wird mit einer Halbleiterlaserpumpquelle 7 gepumpt, die wiederum über ein schwach reflektives Gitter 11 stabilisiert ist. Da der DFB-Wellenleiterlaser 16 nach beiden Seiten emittiert, wird ein hochreflektives Gitter auf der Seite zur Pumplaserdiode hin eingeschrieben. Dies führt zum einen dazu, daß die optische Leistung zur Übertragungsstrecke hin emittiert, und zum anderen gelangt keine Leistung bei der Wellenlänge λᵢ in die Pumplaserdiode. Über eine Trimmregion 20 wird sichergestellt, daß die reflektierte Leistung phasenrichtig in den DFB-Wellenleiterlaser 16 eingekoppelt wird. Ein weiteres Bragg-Gitter 11 ist dem Wellenleiterlaser 16 nachgeschaltet, um nicht absorbierte Pumpleistung in den Wellenleiterlaser wieder zurück zu reflektieren. Die Sendeleistung wird anschließend in einen externen Modulator eingekoppelt. Der externe Modulator besteht vorteilhaft aus einem Elektro-Absorptions-Modulator, der auf beiden Seiten zur passiven Ankopplung an den Streifenwellenleiter und die Monomodefaser jeweils eine Sektion zur Feldaufweitung hat.

Die Monomodefaser führt wiederum zu einem planaren reflektiven Bandpaßfilter, das die optische Leistung bei der Sendewellenlänge auf die Übertragungsstrecke 4 weiterleitet. Da das reflektive Bandpaßfilter nur Wellenlängen in einem sehr kleinen Bereich um die Emissionswellenlänge herum auf den Ausgangswellenleiter überträgt, gelangen Wellenlängen ungleich λᵢ, die in umgekehrter Richtung laufen, nicht in die Sendequelle, da für diese Wellenlängen das reflektive Bandpaßfilter transparent ist und am Ende durch die schräge Kante quasi abgesumpft ist. Durch den Einsatz des Bandpaßfilters 14,15 muß man nicht befürchten, daß eine andere Wellenlänge das Bragg-Gitter 11 ungehindert durchläuft und die Halbleiterlaserdiode errreicht. Das reflektive Bandpaßfilter ersetzt für Wellenlängen ungleich λᵢ einen optischen Isolator.

## Patentansprüche

1. Optischer Sender mit einer modulierbaren, wellenlängenstabilen Laserquelle (1), dessen Signal (λ_{i,u}) in einen Wellenleiter (18) eingekoppelt wird, und mit einem Michelson-Bandpaßfilter (15, 14), **dadurch gekennzeichnet, dass** das Signal (λ_{i,u}) der Laserquelle (1) über einen planaren Wellenleiter (18) und nach Durchlaufen des Michelson-Bandpaßfilters (15, 14) in eine Lichtleitfaser (4) einer Übertragungsstrecke eingekoppelt wird.

2. Optischer Sender nach Anspruch 1, **dadurch gekennzeichnet, daß** die laserquelle (1) ein Halbleiterlaser (7) mit angepaßter Strahlform und Bragg-Gitter (11) ist.

3. Optischer Sender nach Anspruch 2, **dadurch gekennzeichnet, daß** der aktive Streifenwellenleiter im Halbleiterlaser (7) schräg auf die Antireflexionsschicht (9) und der planare Wellenleiter (18) schräg auf den Ankoppelpunkt (10) verläuft.

4. Optischer Sender nach Anspruch 1, **dadurch gekennzeichnet, daß** die Laserquelle (1) aus einem Wellenleiterlaser (16) besteht, der von einem Halbbleiterlaser (7) gepumpt ist und dem ein externer Modulator (2) nachgeschaltet ist

5. Optischer Sender nach Anspruch 4, **dadurch gekennzeichnet, daß** die Emissionswellenlänge (λᵢ) der Laserquelle (1) von einem Bragg-Gitter (11) bestimmt ist.

6. Optischer Sender nach einem der vorangehenden Ansprüche, **dadurch gekennzeichnet, dass** das Michelson-Bandpaßfilter (15, 14) zugleich optischer Isolator für andere Wellenlängen als die Emissionswellenlänge (λᵢ) der Laserquelle (1) ist.

7. Optischer Sender nach einem der vorangehenden Ansprüche, **dadurch gekennzeichnet, daß** die offenen Enden des Michelson-Bandpaßfilters (15, 14) in einem Wellensumpf enden.

8. Cptischer Sender nach Anspruch 7, **dadurch gekennzeichnet, daß** der Wellensumpf aus einer schrägen oder rauhen Kante (13) des planaren Wellenleiters besteht.

## Claims

1. Optical transmitter having a modulatable laser source (1) of stable wavelength, whose signal (λ_{i,u}) is launched into a waveguide (18), and having a Michelson bandpass filter (15, 14), **characterized in that** the signal (λ_{i,u}) of the laser source (1) is launched into an optical fibre (4) of a transmission link via a planar waveguide (18) and after traversing the Michelson bandpass filter (15, 14).

2. Optical transmitter according to Claim 1, **characterized in that** the laser source (1) is a semiconductor laser (7) with an adapted beam shape and a Bragg grating (11).

3. Optical transmitter according to Claim 2, **characterized in that** the active strip waveguide in the semiconductor laser (7) runs obliquely to the antireflection coating (9), and the planar waveguide (18) runs obliquely to the coupling point (10).

4. Optical transmitter according to Claim 1, **characterized in that** the laser source (1) comprises a waveguide laser (16) which is pumped by a semiconductor laser (7) and downstream of which an external modulator (2) is connected.

5. Optical transmitter according to Claim 4, **characterized in that** the emission wavelength (λᵢ) of the laser source (1) is determined by a Bragg grating (11).

6. Optical transmitter according to one of the preceding claims, **characterized in that** the Michelson bandpass filter (15, 14) is simultaneously an optical isolator for other wavelengths than the emission wavelength (λᵢ) of the laser source (1).

7. Optical transmitter according to one of the preceding claims, **characterized in that** the open ends of the Michelson bandpass filter (15, 14) end in a wave sink.

8. Optical transmitter according to Claim 7, **characterized in that** the wave sink comprises an oblique or rough edge (13) of the planar waveguide.

## Revendications

1. Emetteur optique comportant une source laser (1), modulable, à longueur d'onde stable, dont le signal (λ_{i,u}) est couplé dans un guide d'onde (18), et un filtre passe-bande de Michelson (15, 14),
**caractérisé en ce que**
le signal (λ_{i,u}) de la source laser (1) est couplé dans une fibre optique (4) d'un chemin de transmission, par l'intermédiaire d'un guide d'onde planaire (18) et après passage du filtre passe-bande de Michelson (14, 14).

2. Emetteur optique selon la revendication 1,
**caractérisé en ce que**
la source laser (1) est un laser à semi-conducteur (7) à forme de faisceau adapté et réseau de Bragg (11).

3. Emetteur optique selon la revendication 2,
**caractérisé en ce que**
le guide d'onde en bande, actif, passe dans le laser à semi-conducteur (7) en biais par rapport à la couche anti-réflexion (9) et le guide d'onde planaire (18) passe en biais par rapport au point de couplage (10).

4. Emetteur optique selon la revendication 1,
**caractérisé en ce que**
la source laser (1) se compose d'un laser guide d'onde (16) pompé par un laser à semi-conducteur (7) et suivi d'un modulateur externe (2).

5. Emetteur optique selon la revendication 4,
**caractérisé en ce que**
la longueur d'onde démission (λᵢ) de la source laser (1) est définie par un réseau de Bragg (11).

6. Emetteur optique selon l'une quelconque des revendications précédentes,
**caractérisé en ce que**
le filtre passe-bande de Michelson (15, 14) constitue en même temps l'isolateur optique pour d'autres longueurs d'ondes que la longueur d'onde démission (λᵢ) de la source laser (1).

7. Emetteur optique selon l'une quelconque des revendications précédentes,
**caractérisé en ce que**
les extrémités ouvertes du filtre passe-bande de Michelson (15, 14) se terminent dans un puits d'ondes.

8. Emetteur optique selon la revendication 7,
**caractérisé en ce que**
le puits d'ondes se compose d'une arête en biais ou d'une arête rugueuse (13) du guide d'onde planaire.
